(19) Europäisches Patentamt
European Patent Office
Office européen des brevets

(11) EP 4 703 401 A1

(12) **EUROPEAN PATENT APPLICATION**
published in accordance with Art. 153(4) EPC

(43) Date of publication:
**04.03.2026 Bulletin 2026/10**

(21) Application number: **24796848.0**

(22) Date of filing: **15.04.2024**

(51) International Patent Classification (IPC):
***C08G 59/20*** *(2006.01)* ***C08J 5/24*** *(2006.01)*

(52) Cooperative Patent Classification (CPC):
**C08G 59/20; C08J 5/24**

(86) International application number:
**PCT/JP2024/014941**

(87) International publication number:
**WO 2024/225092 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 JP 2023074056**

(71) Applicant: **Toray Industries, Inc.**
**Tokyo 103-8666 (JP)**

(72) Inventors:
- **SUGIMOTO, Atsuki**
  **Iyo-gun, Ehime 791-3193 (JP)**
- **SAKATA, Hiroaki**
  **Nagoya-shi, Aichi 455-8502 (JP)**
- **HAYASHI, Yuki**
  **Iyo-gun, Ehime 791-3193 (JP)**

(74) Representative: **Kador & Partner Part mbB**
**Corneliusstraße 15**
**80469 München (DE)**

(54) **EPOXY RESIN COMPOSITION, PREPREG, FIBER-REINFORCED COMPOSITE MATERIAL, AND METHOD FOR PRODUCING EPOXY RESIN COMPOSITION**

(57) The present invention relates to an epoxy resin composition that contains an epoxy resin obtained by an addition reaction of one or two of epoxy groups contained in one molecule of an epoxy resin (constituent [A']) having four or more epoxy groups in one molecule with a phenolic hydroxyl group contained in a monofunctional phenol (constituent [B]). Provided are: an epoxy resin composition that can exhibit properties superior to those of the prior art in terms of the hot-wet elastic modulus and the rubbery state elastic modulus of a cured product, and the viscosity stability in its use as a matrix resin; a fiber-reinforced composite material using the epoxy resin composition; and a prepreg obtained by impregnating a fiber base material with the resin composition.

EP 4 703 401 A1

## Description

### Technical Field

The present invention relates to: an epoxy resin composition that gives a fiber-reinforced composite material having excellent mechanical properties; and a prepreg and a fiber-reinforced composite material, in which the epoxy resin composition is used.

### Background Art

Conventionally, fiber-reinforced composite materials composed of reinforcing fibers such as carbon fibers or glass fibers and a thermosetting resin such as an epoxy resin or a phenol resin have been applied to many fields, including aerospace, automobiles, railway vehicles, ships, civil engineering and construction, and sporting goods, since they are lightweight and have excellent mechanical properties such as strength and rigidity, heat resistance, and corrosion resistance. Particularly, in those applications requiring high performance, fiber-reinforced composite materials using continuous reinforcing fibers are used. As the reinforcing fibers, carbon fibers excellent in specific strength and specific elastic modulus are used and, as a matrix resin, a thermosetting resin, especially an epoxy resin that exhibits adhesion to carbon fibers in particular and has heat resistance, elastic modulus, and chemical resistance along with minimum cure shrinkage, is often used. In recent years, the properties required for fiber-reinforced composite materials have become more stringent with an increasing number of their use cases. Especially, when a fiber-reinforced composite material is applied to a structural material for aerospace use, a vehicle, or the like, the fiber-reinforced composite material is required to sufficiently maintain physical properties of different characters, such as tensile strength and compressive strength, even under stringent conditions. In order to meet the requirements relating to these physical properties, matrix resins have been improved. It is known that, in order to improve the compressive strength of a fiber-reinforced composite material under a hot-wet condition, it is effective to increase the elastic modulus of a cured matrix resin for inhibiting buckling of reinforcing fibers compressive load. On the other hand, it is necessary to increase the tensile strength translation rate of the reinforcing fibers in order to improve the tensile strength, and it is known that a reduction in the elastic modulus of the cured matrix resin in a rubbery state leads to an improvement in the tensile strength translation rate. Further, it is known that, in order to reduce the elastic modulus of the cured matrix resin in a rubbery state, it is effective to reduce the density of crosslinking points (hereinafter, may be referred to as "cross-linking density") of the cured matrix resin.

Patent Literature 1 proposes an epoxy resin composition in which a multifunctional epoxy resin and naphthol glycidyl ethers are used. Patent Literature 2 proposes an epoxy resin composition in which a pendant-type epoxy resin is used. Patent Literature 3 proposes an epoxy resin composition in which a prescribed amount of a phenol compound having a specific functional group is used.

### Citation List

#### Patent Literature

[Patent Literature 1] WO 2020/058766
[Patent Literature 2] WO 2010/109929
[Patent Literature 3] WO 2018/159574

### Summary of Invention

#### Technical Problem

However, although a cured product of the epoxy resin composition disclosed in Patent Literature 1 exhibits a high elastic modulus under a hot-wet condition, it also exhibits a high elastic modulus in a rubbery state due to its structure that has a high cross-linking density and, as a result, a large improvement in the tensile strength translation rate is not achieved. Meanwhile, a cured product of the epoxy resin composition disclosed in Patent Literature 2 exhibits a superior value for the hot-wet elastic modulus as compared to conventional epoxy resin compositions using general epoxy resins and, although this cured product can exhibit a lower value for the rubbery state elastic modulus, it is still insufficient. Further, a cured product of the epoxy resin composition disclosed in Patent Literature 3 is also not sufficient in terms of the hot-wet elastic modulus and the rubbery state elastic modulus, and sufficient consideration was not given with regard to the possibility that, when the resin composition is used as a matrix resin, the aforementioned phenol compound facilitates the reaction

between the epoxy resin and a curing agent at the time of impregnating fibers with the resin composition or during curing and molding, and thereby causes deterioration of the resin impregnating property due to the loss of viscosity stability and generation of voids due to partial volatilization of the epoxy resin composition.

In view of the above, the present invention provides: an epoxy resin composition that can exhibit properties superior to those of the prior art in terms of the hot-wet elastic modulus and the rubbery state elastic modulus of a cured product, and the viscosity stability in its use as a matrix resin; a fiber-reinforced composite material using the epoxy resin composition; and a prepreg obtained by impregnating a fiber base material with the resin composition.

Solution to Problem

In order to solve the above-described problems, the present invention provides an epoxy resin composition having the following constituents.

1. An epoxy resin composition, containing an epoxy resin (constituent [A]) which has two or more epoxy groups in one molecule, and in which one or two terminals in one molecule have the following structure:

$$-CH(OH)-CH_2-O-Y$$

(wherein, Y represents a non-functional aryl group).

2. An epoxy resin composition, containing an epoxy resin obtained by an addition reaction of one or two of epoxy groups contained in one molecule of an epoxy resin (constituent [A']) having four or more epoxy groups in one molecule with a phenolic hydroxyl group contained in a monofunctional phenol (constituent [B]).

3. The epoxy resin composition according to the above 1 or 2, further containing an epoxy resin (constituent [A']) having four or more epoxy groups in one molecule, and a curing agent (constituent [C]).

4. The epoxy resin composition according to the above 1, wherein the epoxy resin (constituent [A]) is represented by any one of the below-described Formulae (VI), (VII), and (VIII).

5. The epoxy resin composition according to any one of the above 2 to 4, wherein the constituent [A'] is contained in an amount of 50% by mass to 84% by mass and the constituent [A] is contained in an amount of 16% by mass to 50% by mass, taking a total amount of the epoxy resins contained in the resin composition as 100% by mass.

6. The epoxy resin composition according to any one of the above 2 to 5, wherein the constituent [B] is a hydroxyphenyl compound, a naphthol compound, or a hydroxybiphenyl compound.

7. The epoxy resin composition according to any one of the above 1 and 3 to 6, wherein the structure of Y is represented by the below-described Formula (IX), (X), (XI), or (XII).

8. The epoxy resin composition according to any one of the above 3 to 6, wherein the constituent [C] is an aromatic polyamine.

The prepreg according to the present invention is obtained by impregnating reinforcing fibers with the epoxy resin composition according to any one of the above 1 to 8.

Further, the fiber-reinforced composite material according to the present invention contains: a cured epoxy resin obtained by curing the epoxy resin composition according to any one of the above 1 to 8; and reinforcing fibers.

Moreover, the method of producing an epoxy resin composition according to the present invention includes: allowing a constituent [A'] and a constituent [B] to undergo an addition reaction at 100°C to 180°C in the presence of a curing accelerator (constituent [D]); subsequently lowering the temperature to less than 100°C; and then adding a constituent [C]:

[A']: an epoxy resin having four or more epoxy groups in one molecule
[B]: a monofunctional phenol
[C]: a curing agent
[D]: a curing accelerator.

Advantageous Effects of Invention

According to the present invention, an epoxy resin composition that exhibits both an excellent elastic modulus under a hot-wet condition and a low rubbery state elastic modulus as a cured epoxy resin can be provided. A fiber-reinforced composite material and a prepreg, in which the epoxy resin composition of the present invention and a fiber base material are used together, exhibit excellent compressive strength and excellent tensile properties under a hot-wet condition because of the excellent properties of the epoxy resin composition.

Description of Embodiments

The epoxy resin (constituent [A]) contained in the epoxy resin composition according to the present invention has two or more epoxy groups in one molecule, and one or two terminals in one molecule thereof have the following structure:

$$-CH(OH)-CH_2-O-Y$$

In this structure, Y represents a non-functional aryl group. Examples of the aryl group in the present invention include: groups represented by the below-described Formula (XII), such as a phenyl group, a tolyl group, and a xylyl group; substituents represented by the below-described Formula (IX); and substituents such as a naphthyl group (the below-described Formula (X)) and a biphenyl group (the below-described Formula (XI)), and the aryl group is preferably a substituent represented by Formula (IX), a naphthyl group (Formula (X)), or a biphenyl group (Formula (XI)). The term "non-functional group" used herein refers to a group that cannot undergo an addition reaction with an epoxy group contained in the above-described epoxy resin (constituent [A]), the below-described constituent [A'], or other epoxy resins. The epoxy resin (constituent [A]) preferably has five or less epoxy groups, more preferably four or less epoxy groups, in one molecule. Preferred specific structures of the epoxy resin (constituent [A]) are as described below.

The epoxy resin (constituent [A]) is preferably produced by an addition reaction of one or two of epoxy groups contained in one molecule of an epoxy resin (constituent [A']) having four or more epoxy groups in one molecule with a phenolic hydroxyl group contained in a monofunctional phenol (constituent [B]).

The constituents that are preferably used in the production of the epoxy resin composition of the present invention will now be described in detail. In the present invention, the term "aromatic" refers to a compound that contains an aromatic hydrocarbon or a conjugated unsaturated heterocyclic compound in its chemical structure. Further, the term "epoxy resin" may encompass the above-described epoxy resin (constituent [A]). Moreover, when the epoxy resin constitutes the epoxy resin composition of the present invention together with other constituents, the epoxy resin is defined as the constituent [A].

The constituent [A'] used in the present invention is an epoxy resin having four or more epoxy groups in one molecule. Specific examples of the epoxy resin include: diaminodiphenylmethane-type, diaminodiphenyl sulfone-type, *meta*-xylenediamine-type, phenol novolac-type, tetra phenylol ethane-type, naphthalene-type, biphenyl-type, and isocyanurate-type epoxy resins; and halogen-substituted derivatives, alkyl-substituted derivatives, and hydrogenated products thereof. In the present invention, the epoxy resin composition contains a molecular structure formed by an addition reaction of one or two of the four or more epoxy groups contained in one molecule of the constituent [A'] with a phenolic hydroxyl group contained in the below-described monofunctional phenol (constituent [B]), whereby a cured product of the epoxy resin composition (hereinafter, may be referred to as "cured resin") exhibits a high elastic modulus under a hot-wet condition while having a structure with a low density of crosslinking points (i.e., a structure that can have a low rubbery state elastic modulus). It is noted here that the term "hot-wet condition" used herein refers to a high-temperature and humid condition. In the resin compositions of the prior art, a low cross-linking density usually means a low elastic modulus under the above-described condition due to the generation of a large free volume in cured resins. However, in the epoxy resin composition of the present invention, although a cured product thereof has a low cross-linking density, the free volume that is believed to be naturally generated is filled by using a monofunctional phenol residue derived from the constituent [B]. Therefore, the cured resin never exhibits a low elastic modulus under a hot-wet condition. In other words, in at least a part of the constituent [A'], one or two of the four or more epoxy groups do not function as crosslinking points but play a role in filling the free volume in the cured resin, and the remaining epoxy groups react with the constituent [C] (curing agent) to function as crosslinking points and ensure heat resistance. From the standpoint of inhibiting a decrease in heat resistance and forming a cross-linked structure with sufficient strength by such a reaction, it is important that the constituent [A'] be an epoxy resin having four or more epoxy groups in one molecule. The number of epoxy groups in one molecule of the constituent [A'] is preferably six or less since this prevents the density of the crosslinking points of the cured resin from being excessively high and provides the cured resin with a structure having a low rubbery state elastic modulus. Further, as described above, the epoxy resin used in the present invention can be obtained by performing in advance an addition reaction between one or two of the four or more epoxy groups contained in the constituent [A'] and a phenolic hydroxyl group contained in the monofunctional phenol (constituent [B]); however, since the resin viscosity increases with this addition reaction, from the standpoint of the moldability of the epoxy resin composition, the constituent [A'] is preferably an epoxy resin that is liquid at 20°C. As for the term "liquid at 20°C" used herein, an epoxy resin is defined as being liquid when a metal piece having a specific gravity of 7 or more that is in the same temperature state as the epoxy resin to be measured is placed on the subject epoxy resin and the metal piece is instantly buried by gravity. Examples of the material of the metal piece having a specific gravity of 7 or more include iron (steel), cast iron, and copper.

In the present invention, from the standpoint of the heat resistance and the elastic modulus of the cured resin, the epoxy equivalent weight of the constituent [A'] that can be used as a raw material is preferably 90 g/eq to 300 g/eq, more preferably 100 g/eq to 200 g/eq. The epoxy equivalent weight is preferably 300 g/eq or less since this prevents the cross-linking density of the cured resin from being excessively low and provides the cured resin with excellent heat resistance

and elastic modulus. Further, the epoxy equivalent weight is preferably 90 g/eq or more since this prevents the cross-linking density of the cured resin from being excessively high and provides the cured resin with a low rubbery state elastic modulus.

As a specific chemical structure of the constituent [A'], a compound represented by the following Formula (I) is preferred. Particularly, when X is $-CH_2-$ or -O-, the epoxy resin has a low viscosity, which is preferred from the standpoint of the ease of handling.

[Chemical Formula 1]

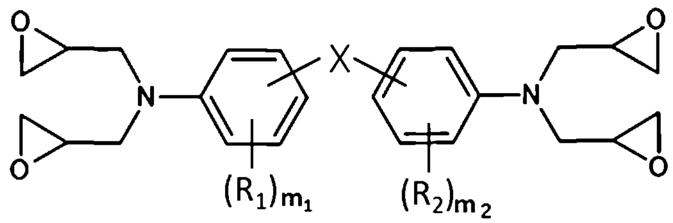

(I)

(in Formula (I), $R_1$ and $R_2$ each represent at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_1$ and $m_2$ each represent an integer of 0 to 4; when $m_1$ or $m_2$ is 2 or more, plural $R_1$s or $R_2$s are optionally the same or different; and X is any one of the structures represented by -O-, -S-, -CO-, -C(=O)O-, $-SO_2-$, $-CH_2-$, $-CH(CH_3)-$, $-C(CH_3)_2-$, and -N=N-)

Examples of the epoxy resin represented by Formula (I) include tetraglycidyl-4,4'-diaminodiphenylmethane, tetraglycidyl-3,4'-diaminodiphenylmethane, tetraglycidyl-3,3'-diaminodiphenylmethane, tetraglycidyl-4,4'-diaminodiphenyl ether, tetraglycidyl-3,4'-diaminodiphenyl ether, tetraglycidyl-3,3'-diaminodiphenyl ether, tetraglycidyl-4,4'-diaminodiphenyl sulfone, tetraglycidyl-3,4'-diaminodiphenyl sulfone, and tetraglycidyl-3,3'-diaminodiphenyl sulfone. For example, as tetraglycidyl-4,4'-diaminodiphenylmethane, a commercially available product can be used, and examples thereof include "SUMIEPOXY" (registered trademark) ELM-434 (manufactured by Sumitomo Chemical Co., Ltd.), "jER" (registered trademark) 604 (manufactured by Mitsubishi Chemical Group Corporation), and "ARALDITE" (registered trademark) MY721 (manufactured by Huntsman Advanced Materials LLC).

In the present invention, an epoxy resin other than the constituents [A'] and [A] may be incorporated within a range that does not impair the effects of the present invention.

The constituent [B] used in the present invention is a monofunctional phenol. The monofunctional phenol is a compound that is a phenol and does not have a functional group capable of undergoing an addition reaction with an epoxy group contained in the constituent [A'], except for one phenolic hydroxyl group bound to an aromatic ring in the molecule. By not having two or more functional groups that react with an epoxy group of the constituent [A'] in one molecule, a residue of the monofunctional phenol that has undergone an addition reaction with an epoxy group does not function as a crosslinking point, and fills the free volume in the cured resin; therefore, the cured resin exhibits a high elastic modulus under a hot-wet condition. If the monofunctional phenol contains two or more functional groups, which are capable of undergoing an addition reaction with the functional groups of the constituent [A'] containing epoxy groups, in one molecule along with the phenolic hydroxyl group, the monofunctional phenol reacts with the constituent [A'] in the cured resin and functions as a crosslinking point; therefore, the function of filling the free volume in the cured resin is very limited and, generally, the cured resin does not exhibit a high elastic modulus under a hot-wet condition that is demonstrated in the present invention.

Further, the reaction between the phenolic hydroxyl group and an epoxy group usually starts at a relatively low temperature of about 100°C in the presence of the below-described constituent [D] (curing accelerator), and the monofunctional phenol reacts with an epoxy group of the constituent [A'] before being volatilized and can thereby be incorporated into the resulting composition; therefore, the volatile content (% by mass) in the step of curing the epoxy resin composition of the present invention is kept lower than that of an epoxy resin composition using an epoxy resin of the prior art such as a pendant-type epoxy resin. When the volatile content is high in the curing step, voids are generated in the resulting cured product and act as origins of destruction to cause a reduction in resin strength; therefore, the volatile content is preferably as low as possible. As a standard of the volatile content, when the epoxy resin composition is left to stand in a hot-air oven at 160°C for 30 minutes, the volatile content is preferably 0.5% by mass or less, more preferably 0.3% by mass or less, still more preferably 0.2% by mass or less.

As described above, from the standpoint of filling the free volume in the cross-linked structure of the cured product as well as the standpoint of reducing the volatile content in the step of curing the epoxy resin composition, the monofunctional phenol (constituent [B]) has an active hydrogen equivalent weight derived from the phenolic hydroxyl

group (which is equal to an average molecular weight since the constituent [B] is a monofunctional phenol) of preferably 100 g/eq to 400 g/eq, more preferably 120 g/eq to 300 g/eq, still more preferably 130 g/eq to 260 g/eq. The number of aromatic rings contained in one molecule of the monofunctional phenol is not limited and may be, for example, two or more. Particularly, a monofunctional phenol having two aromatic rings is preferably used. It is noted here, however, that the number of aromatic rings contained in one molecule may be one. Examples of the monofunctional phenol include hydroxyphenyl compounds, naphthol compounds, and hydroxybiphenyl compounds. Specific examples thereof include 4-hydroxybiphenyl, 3-hydroxybiphenyl, 2-hydroxybiphenyl, $\alpha$-naphthol, $\beta$-naphthol, *p*-cumylphenol, *m*-cumylphenol, *o*-cumylphenol, 4-phenoxyphenol, 3-phenoxyphenol, 4-benzylphenol, 3-benzylphenol, styrenated phenol, tribenzylphenol, 2,6-di-*tert*-butyl-4-methylphenol, 3-methyl-6-*tert*-butylphenol, and 2,3,6-trimethylphenol.

As the hydroxyphenyl compounds, compounds represented by the below-described Formula (II) or (V) are preferred; as the naphthol compounds, compounds represented by the below-described Formula (III) are preferred; and, as the hydroxybiphenyl compounds, compounds represented by the below-described Formula (IV) are preferred. Particularly, hydroxyphenyl compounds and naphthol compounds are preferred from the standpoint of the ease of reaction, since they have excellent solubility in epoxy resins and general-purpose organic solvents. Especially, naphthol compounds represented by Formula (III) are preferred from the standpoint of allowing the cured resin to have excellent room temperature elastic modulus in a dry state.

In the following Formulae (II), (III), and (IV), from the standpoint of viscosity and heat resistance, $m_3 + m_4$, $m_5$, and $m_6 + m_7$ are each preferably 2 or less, and at least one or all of $m_3$ to $m_7$ are preferably 1 or less, more preferably 0. In the following Formula (V), from the standpoint of volatile content reduction and heat resistance, $m_8$ is preferably 1 to 4, more preferably 2 to 3.

[Chemical Formula 2]

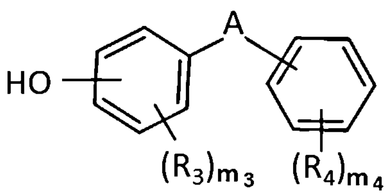

(II)

(in Formula (II), $R_3$ and $R_4$ each represent at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_3$ represents an integer of 0 to 4; $m_4$ represents an integer of 0 to 5; when $m_3$ or $m_4$ is 2 or more, plural $R_3$s or $R_4$s are optionally the same or different; and A is any one of the structures represented by -O-, -S-, -CO-, -C(=O)O-, $-SO_2-$, $-CH_2-$, $-CH(CH_3)-$, $-C(CH_3)_2-$, and -N=N-)

[Chemical Formula 3]

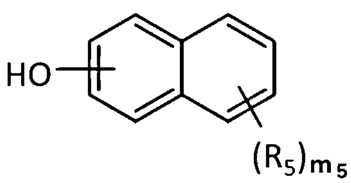

(III)

(in Formula (III), $R_5$ represents at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_5$ represents an integer of 0 to 7; and, when $m_5$ is 2 or more, plural $R_5$s are optionally the same or different)

[Chemical Formula 4]

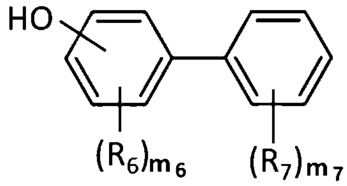

(IV)

(in Formula (IV), $R_6$ and $R_7$ each represent at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_6$ represents an integer of 0 to 4; $m_7$ represents an integer of 0 to 5; and, when $m_6$ or $m_7$ is 2 or more, plural $R_6$s or $R_7$s are optionally the same or different)

[Chemical Formula 5]

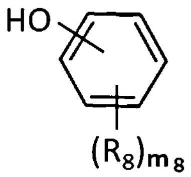

(V)

(in Formula (V), $R_8$ represents at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_8$ represents an integer of 0 to 5; and, when $m_8$ is 2 or more, plural $R_8$s are optionally the same or different)

The epoxy resin composition of the present invention preferably contains a curing agent as the constituent [C]. The curing agent described here is a curing agent for the epoxy resin contained in the epoxy resin composition of the present invention, which is a compound having, in one molecule, at least two active groups that can react with epoxy groups. Specific examples of the curing agent include dicyandiamide, aromatic polyamines, and various acid anhydrides. By using an aromatic polyamine as the curing agent, a cured epoxy resin having good heat resistance can be obtained. Particularly, among aromatic polyamines, various isomers of diaminodiphenyl are suitable curing agents not only from the standpoint of enabling to obtain a cured epoxy resin having good heat resistance and elastic modulus because of their rigid chemical structures, but also from the standpoint of moderately suppressing the amine nucleophilicity because of their electron-withdrawing functional groups, and enabling to obtain a good pot life in the resin preparation process and the manufacturing process of an intermediate base material such as a prepreg. Further, among aromatic polyamines, those compounds in which an alkyl group is substituted on a diaminodiphenylmethane skeleton are suitable curing agents from the standpoint of providing, by the effect of the substituted alkyl group, a cured resin that has a low water absorption coefficient and thus exhibits excellent elastic modulus under a hot-wet condition.

Examples of commercially available aromatic polyamine curing agents include SEIKACURE-S (manufactured by Seika Corporation), "jERcure" (registered trademark) W (manufactured by Japan Epoxy Resin Co., Ltd.), 3,3'-DAS (manufactured by Mitsui Chemicals, Inc.), "PRIMACURE" (registered trademark) M-DEA (manufactured by arxada Japan), "PRIMACURE" (registered trademark) M-DIPA (manufactured by arxada Japan), "PRIMACURE" (registered trademark) M-MIPA (manufactured by arxada Japan), and "PRIMACURE" (registered trademark) DETDA (manufactured by arxada Japan). These aromatic polyamines may be used singly, or in combination of two or more thereof as appropriate. Further, when mixed with other components, these aromatic polyamines may be in the form of a solid (powder) or a liquid, and may be mixed in both of these forms to be used.

In the case of using the constituent [C] together with the constituent [B], from the standpoint of obtaining a cured epoxy resin that exhibits good mechanical properties, the blending amount of the constituent [C] is preferably such an amount that the ratio of a total number of moles of active hydrogen including the number of moles of active hydrogen in the constituents [B] and [C] is 0.6 to 1.4 times with respect to the number of moles of epoxy groups derived from all epoxy resins blended in the epoxy resin composition. This molar ratio is more preferably 0.8 to 1.2 times since excellent heat resistance is thereby obtained. When the molar ratio is 1.1 to 1.5 times, excellent fast curability is obtained, which is preferred.

In the method of producing an epoxy resin composition according to the present invention, it is preferred to blend a curing accelerator as a constituent [D]. Specifically, the constituent [D] can act as an accelerator of an addition reaction between an epoxy resin and a monofunctional phenol, and accelerates a reaction between the constituent [A'] and the constituent [B]. Meanwhile, the constituent [D] may also accelerate a reaction between the constituent [A'] and the constituent [C], and this is rather preferred. As the curing accelerator, from the standpoint of satisfying both the storage stability and the reactivity in the resulting epoxy resin composition, it is preferred to use at least one selected from the group consisting of aromatic urea compounds, imidazole derivatives, and phosphorus compounds.

Examples of the aromatic urea compounds include 3-phenyl-1,1-dimethylurea, 3-(3-chloro-4-methylphenyl)-1,1-dimethylurea, 3-(3,4-dichlorophenyl)-1,1-dimethylurea, and toluene-bis-dimethylurea. Examples of commercially available aromatic urea compounds that can be used include DCMU-99 (manufactured by Hodogaya Chemical Co., Ltd.) and "OMICURE" (registered trademark) 24 (manufactured by PTI Japan Ltd.).

Examples of the imidazole derivatives include 1-benzyl-2-methylimidazole, 1-benzyl-2-ethylimidazole, 1-cyanoethyl-2-methylimidazole, 1-cyanoethyl-2-ethyl-4-methylimidazole, and 1-cyanoethyl-2-phenylimidazole. Examples of commercially available imidazole derivatives include "CUREDUCT" (registered trademark) P-0505, 1B2MZ, 1B2PZ, 2MZ-CN, 2E4MZ-CN, and 2PZ-CN (all of which are manufactured by Shikoku Kasei Holdings Corporation).

Examples of the phosphorus compounds include triphenyl phosphine, tri-*o*-tolyl phosphine, tris(*p*-methoxyphenyl)phosphine, triphenyl phosphine, triphenyl borane, and tetraphenylphosphonium tetraphenyl borate. Examples of commercially available phosphorus compounds include "HOKKO TPP" (registered trademark), "TOTP" (registered trademark), "TPP-K" (registered trademark), and "TPP-MK" (registered trademark) (all of which are manufactured by Hokko Chemical Industry Co., Ltd.).

The content of the curing accelerator serving as the constituent [D] is preferably 0.1 to 8.0 parts by mass, more preferably 0.5 to 5.0 parts by mass, with respect to 100 parts by mass of all epoxy resins contained in the resin composition. By incorporating the constituent [D] in this range, an epoxy resin composition that gives a cured resin having an excellent balance between storage stability and reaction rate as well as good physical properties can be obtained.

In the epoxy resin composition of the present invention, it is also preferred to incorporate a thermoplastic resin, which dissolves in any of the epoxy resins constituting the composition at room temperature and is dissolved in the epoxy resin, as a constituent [E] within a range that does not impair the effects of the present invention. Such a thermoplastic resin can be incorporated for the purposes of controlling the tackiness properties of the resulting prepreg, controlling the fluidity of a matrix resin at the time of heat-curing the prepreg, and providing toughness to the resulting fiber-reinforced composite material without impairing the heat resistance and the elastic modulus. The thermoplastic resin is preferably one composed of a polyaryl ether skeleton, and examples thereof include polysulfone, polyphenylsulfone, polyether sulfone, polyetherimide, polyphenylene ether, polyether ether ketone, and polyether ether sulfone. These thermoplastic resins composed of polyaryl ether skeletons may be used singly or in combination as appropriate. Thereamong, polyether sulfone and polyetherimide can be preferably used since they can provide toughness to the resulting fiber-reinforced composite material without impairing the heat resistance and the mechanical properties.

As the thermoplastic resin serving as the constituent [E], a commercially available product can be used. Examples thereof include: "SUMIKA EXCEL" (registered trademark) 5003P, 5003PS, 5900P, 5400P, 5200P, 4800P, 4100P, 3600P, and 2603MP (which are manufactured by Sumitomo Chemical Co., Ltd.); PET and PBT (which are manufactured by KDA Corporation); "J-POVAL" (registered trademark) JC-25, JM-17, and JP-03 (which are manufactured by Japan VAM & POVAL Co., Ltd.); "S-LEC" (registered trademark) BX-L, KS-1, and KS-10 (which are manufactured by Sekisui Chemical Co., Ltd.); "ULTRASEN" (registered trademark) 515 and 530 (which are manufactured by Tosoh Corporation); JPH-3800 (manufactured by Johoku Chemical Co., Ltd.); and YS POLYSTAR UH130 (manufactured by Yasuhara Chemical Co., Ltd.).

From the standpoint of the ease of forming a resin film and the tackiness properties of a prepreg produced by impregnating the resin film with a fiber base material, the blending amount of the thermoplastic resin is preferably 1 to 50 parts by mass, taking the amount of all epoxy resins as 100 parts by mass. The blending amount of the thermoplastic resin is more preferably 2 to 20 parts by mass.

In the production of a prepreg using the epoxy resin composition of the present invention as a matrix resin, usually, the epoxy resin composition is heated from 60°C to about 80°C, and a resin film is subsequently prepared, after which the obtained resin film is impregnated into reinforcing fibers at a temperature of about 80°C to 130°C; therefore, the viscosity of the epoxy resin composition of the present invention after being retained at 80°C for 3 hours is preferably 4.0 times or less, more preferably 3.0 times or less, of the initial viscosity at 80°C. A lower limit thereof is not particularly limited; however, it is usually 1.1 to 1.3 times. The viscosity increase ratio after the 3-hour retention at 80°C is determined by measuring the viscosity $\eta^*_1$ after 1-minute retention at 80°C (initial viscosity at 80°C) and the viscosity $\eta^*_{180}$ after 3-hour retention at 80°C, and calculating the value of $\eta^*_{180}/\eta^*_1$. It is noted here that the "viscosity" refers to a complex viscosity $\eta^*$ measured at a frequency of 0.5 Hz and a gap of 1 mm using a dynamic viscoelasticity measuring device ARES rheometer (manufactured by TA Instruments Inc.) with a flat parallel plate having a diameter of 25 mm as the upper measuring jig and a flat parallel plate having a diameter of 40 mm as the lower measuring jig.

The viscosity increase ratio after 3-hour retention at 80°C can be used as an index of the pot life of the epoxy resin composition in the epoxy resin composition kneading process and the prepreg production process. In other words, a lower viscosity increase ratio after 3-hour retention at 80°C means a better pot life. When the viscosity increase ratio of the epoxy resin composition after 3-hour retention at 80°C is 4.0 times or less, the epoxy resin composition has a high thermal stability and is likely to yield a resin film having a stable resin areal weight in the prepreg production process, so that the quality of the resulting prepreg is stable. In addition, when the pot life is good, the impregnation property of the resin into the reinforcing fibers is hardly deteriorated, and voids are thus unlikely to be generated in a molded article.

In the present invention, the above-described epoxy resin is used, and the epoxy resin can be obtained as an epoxy resin produced by reacting the constituent [A'] and the constituent [B] in advance, specifically as the constituent [A] produced by an addition reaction of the phenolic hydroxyl group contained in the constituent [B] with one or two of the four or more epoxy groups of the constituent [A']. By producing the constituent [A] in advance, the viscosity increase ratio of the epoxy resin composition can be easily controlled in the above-described preferred range. In other words, the reaction between the constituent [A'] and the constituent [B] in the presence of the constituent [D] can cause an increase in viscosity when the epoxy resin composition is maintained at 80°C for 3 hours; therefore, for example, in the epoxy resin composition preparation process, by heat-treating the constituents [A'] and [B] with kneading in the presence of the constituent [D] but in the absence of the constituent [C] at a higher temperature in a range of 100°C to 180°C for 1 hour and thereby allowing the epoxy groups and the phenolic hydroxyl group to react in advance, an epoxy resin (constituent [A]) in which the constituents [A'] and [B] have reacted with each other can be obtained while reducing the viscosity increase ratio of the epoxy resin composition at 80°C. The temperature of the heat treatment is more preferably in a range of 100°C to 160°C, still more preferably in a range of 100°C to 150°C. By setting the reaction temperature at 100°C or higher, the time required for completing the reaction tends to be further shortened. Further, by setting the reaction temperature at 180°C or lower, the amount of volatile components and the possibility of gelation tend to be reduced.

In the epoxy resin composition preparation process, after the heat treatment, the constituent [C] is preferably kneaded with other epoxy resin composition containing the constituent [A] in a state where the temperature is lowered to less than 100°C, and the temperature is more preferably 90°C or less, still more preferably 80°C or less. When the temperature of kneading the constituent [C] is less than 100°C, the reaction between the constituent [A] and the constituent [C] is suppressed, so that an increase in the viscosity of the epoxy resin composition during the kneading is reduced. A lower limit of the temperature of kneading the constituent [C] is preferably 50°C or higher. Generally, as long as the temperature is 50°C or higher, the epoxy resin composition does not have an excessively high viscosity, and the constituent [C] can be sufficiently dispersed in the epoxy resin composition by kneading.

From the standpoint of reducing the viscosity increase ratio after 3-hour retention at 80°C, a state in which the reaction between the phenolic hydroxyl group contained in the constituent [B] and the epoxy groups has been completed in the constituent [A] and the epoxy resin composition is deemed to contain substantially no unreacted monofunctional phenol is preferred. The substantial absence of residual unreacted monofunctional phenol can be judged from, for example, an exothermic reaction peak attributed to the reaction between the epoxy groups and the phenolic hydroxyl group, which is obtained when the temperature is raised from 20°C to 180°C at a rate of 5°C/min in a nitrogen atmosphere using a differential scanning calorimeter (DSC). Usually, the exothermic reaction peak of the reaction between the epoxy groups and the phenolic hydroxyl group is observed around 100°C to 150°C; however, after the heat treatment performed at 100°C to 180°C, this exothermic reaction peak is significantly smaller than that before the heat treatment, or disappears. As for the reaction peak of the epoxy groups and the phenolic hydroxyl group, when the ratio of the amount of heat generation after the heat treatment with respect to the amount of heat generation before the heat treatment is 0.05 or lower, the reaction rate of the phenolic hydroxyl group of the constituent [B] is deemed to be 95% or higher, and it can be judged that there is substantially no unreacted monofunctional phenol. As another method for judging the presence or absence of unreacted monofunctional phenol, a method using HPLC measurement may be employed, and the presence or absence of a peak derived from the constituent [B] after the heat treatment, and the ratio of area value between the peak derived from the constituent [B] after the heat treatment and the peak derived from the constituent [B] before the heat treatment can be determined. When this ratio is 0.05 or lower, it can be judged that there is substantially no unreacted monofunctional phenol.

In the epoxy resin composition of the present invention, when a total amount of the epoxy resins contained in the resin composition is taken as 100% by mass, the constituent [A] is contained in an amount of preferably 16% by mass to 50% by mass, more preferably 19% by mass to 45% by mass, still more preferably 22% by mass to 41% by mass. Meanwhile, the constituent [A'] is contained in an amount of preferably 50% by mass to 84% by mass, more preferably 55% by mass to 81% by mass, still more preferably 59% by mass to 78% by mass. In these ranges, a cured product of the epoxy resin composition easily exhibits excellent flexural modulus and glass-region elastic modulus under a hot-wet condition while inhibiting a decrease in heat resistance. In addition, by incorporating the constituent [A] into the epoxy resin composition of the present invention, not only the above-described effect of reducing the viscosity increase ratio after 3-hour retention at 80°C, but also the effect of achieving both excellent impregnation property in the resin impregnation step of a reinforcing-fiber base material in the prepreg production and suitable prepreg surface tackiness for the prepreg

lamination step, can be exerted at the same time. In recent years, the prepreg lamination step has been increasingly automated from the standpoint of production efficiency and, in order to allow a prepreg to exhibit the surface tackiness required in such an automated lamination step, generally, the viscosity at room temperature (20°C) at which the prepreg is laminated is increased by, for example, dissolving a large amount of a thermoplastic resin in an epoxy resin. However, the dissolution of a large amount of a thermoplastic resin also leads to a large increase in the viscosity in high-temperature ranges of the resin film manufacturing process (usually performed at 60°C to 80°C) and the resin impregnation step of a reinforcing-fiber base material (usually performed at 80°C to 130°C) and, therefore, makes it difficult to achieve both an improvement in the viscosity at room temperature (20°C) and a reduction in the viscosity in the resin impregnation step at the same time. By using the epoxy resin composition of the present invention that contains the constituent [A], not only a high elastic modulus under a hot-wet condition and a low rubbery state elastic modulus can both be achieved but also the viscosity at 20°C can be greatly improved while keeping the increase in viscosity at 100°C small as compared to the viscosity of the constituent [A'] itself, so that a prepreg using the epoxy resin composition can exhibit the above-described resin impregnation property and surface tackiness. Further, by allowing the constituent [B] to react with the constituent [A'] in advance to form the constituent [A], there is also an advantage that the volatile content in curing of the epoxy resin composition can be further reduced.

The viscosity of the epoxy resin composition containing the constituent [A] is greatly affected by the viscosity of the constituent [A'] itself; therefore, the constituent [A'] is preferably liquid at 20°C, and the constituent [A'] more preferably has a viscosity of 1.0 Pa·s or less at 100°C. Specifically, the constituent [A'] suitably has a structure represented by Formula (I).

The constituent [A] preferably has a structure exemplified by the following Formulae (VI) to (VIII). Particularly, a cured product of the epoxy resin composition in which an epoxy mixture containing Formula (VI) is used is preferred since it is excellent in heat resistance as well.

[Chemical Formula 6]

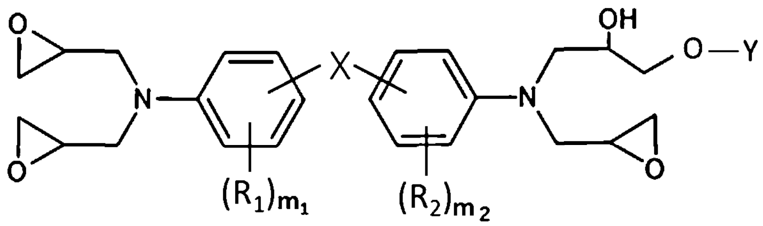

(VI)

[Chemical Formula 7]

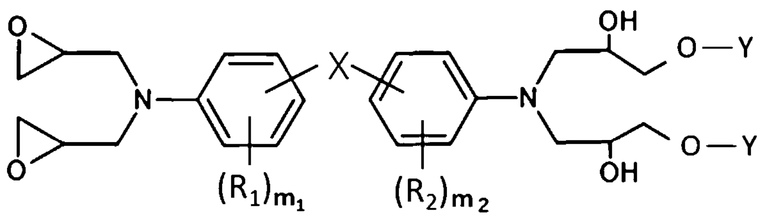

(VII)

[Chemical Formula 8]

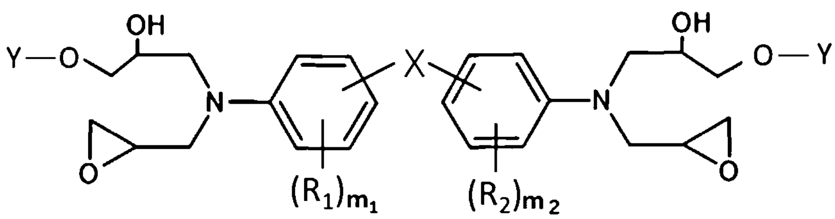

(VIII)

(in Formulae (VI), (VII), and (VIII), Y represents a non-functional aryl group; $R_1$ and $R_2$ each represent at least one selected from the group consisting of an aliphatic hydrocarbon group having 1 to 5 carbon atoms, an alkoxy group having 1 to 6 carbon atoms, an alicyclic hydrocarbon group having 3 to 6 carbon atoms, an aromatic hydrocarbon group having 6 to 10 carbon atoms, an acyl group, a trifluoromethyl group, a nitro group, a cyano group, a phenyl group, and a halogen atom; $m_1$

and $m_2$ each represent an integer of 0 to 4; when $m_1$ or $m_2$ are 2 or more, plural $R_1$s or $R_2$s are optionally the same or different; and X is any one of the structures represented by -O-, -S-, -CO-, -C(=O)O-, $-SO_2-$, $-CH_2-$, $-CH(CH_3)-$, $-C(CH_3)_2-$, and -N=N-)

Further, the non-functional aryl groups Y in the structures of Formulae (VI) to (VIII) have a chemical formula weight of preferably 83 g/mol to 383 g/mol, more preferably 103 g/mol to 283 g/mol and, from the standpoint of allowing the cured product to exhibit high heat resistance and reducing the rubbery state elastic modulus, the chemical formula weight is still more preferably 113 g/mol to 243 g/mol. The "chemical formula weight" refers to a total atomic weight of Y and is generally a value obtained by subtracting 17 g/mol, which is the chemical formula weight of a hydroxy group, from the active hydrogen equivalent weight derived from the phenolic hydroxyl group of the constituent [B]. The structures exemplified by the below-described Formulae (IX) to (XII) are preferred. Particularly, an epoxy resin composition that contains the constituent [A] of any of Formulae (VI) to (VIII) in which Y is represented by Formula (X) is preferred from the standpoint of obtaining a cured resin that has excellent room temperature elastic modulus in a dry state.

[Chemical Formula 9]

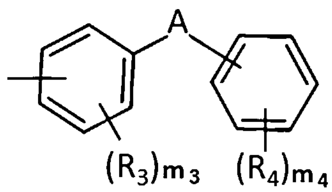

(IX)

(in Formula (IX), $R_3$ and $R_4$ each represent at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_3$ represents an integer of 0 to 4; $m_4$ represents an integer of 0 to 5; when $m_3$ or $m_4$ is 2 or more, plural $R_3$s or $R_4$s are optionally the same or different; and A is any one of the structures represented by -O-, -S-, -CO-, -C(=O)O-, $-SO_2-$, $-CH_2-$, $-CH(CH_3)-$, $-C(CH_3)_2-$, and -N=N-)

[Chemical Formula 10]

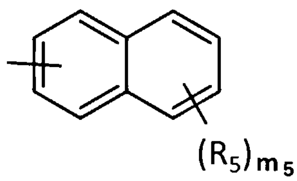

(X)

(in Formula (X), $R_5$ represents at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_5$ represents an integer of 0 to 7; and, when $m_5$ is 2 or more, plural $R_5$s are optionally the same or different)

[Chemical Formula 11]

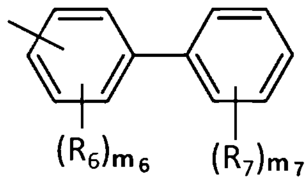

(XI)

(in Formula (XI), $R_6$ and $R_7$ each represent at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a

nitro group, a cyano group, a phenyl group, and a halogen atom; $m_6$ represents an integer of 0 to 4; $m_7$ represents an integer of 0 to 5; and, when $m_6$ or $m_7$ is 2 or more, plural $R_6$s or $R_7$s are optionally the same or different)

[Chemical Formula 12]

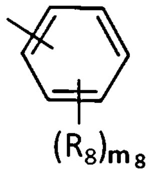

(XII)

(in Formula (XII), $R_8$ represents at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_8$ represents an integer of 0 to 5; and, when $m_8$ is 2 or more, plural $R_8$s are optionally the same or different)

In the present invention, it is also preferable to incorporate particles mainly composed of a thermoplastic resin (hereinafter, may be referred to as "thermoplastic resin particles"). In the prepreg of the present invention, such thermoplastic resin particles not only maintain a particulate form without dissolving in other constituents such as epoxy resins but also, even when heated at a temperature (e.g., 180°C) that is usually used for preparing a fiber-reinforced composite material, do not dissolve in the fiber-reinforced composite material and rather maintain a particulate form. By incorporating such thermoplastic resin particles, when the prepreg of the present invention is laminated to prepare a fiber-reinforced composite material, the toughness of a resin layer formed between adjacent layers of reinforcing fibers is improved, so that the impact resistance is improved.

As the resin of the thermoplastic resin particles, a resin of any type that can be mixed into the epoxy resin composition can be used. Particularly, a polyamide is most preferred and, among polyamides, polyamide 12, polyamide 6, polyamide 11, a polyamide 6/12 copolymer, and a polyamide converted into semi-IPN polyamide (macromolecular interpenetrating network structure) with any of the epoxy compounds described in Examples 1 to 7 of JP 2009-221460A provide a particularly good adhesive strength with epoxy resins.

As for the shape and the form of the thermoplastic resin particles, the thermoplastic resin particles may be spherical particles, non-spherical particles, or porous particles. Spherical particles are preferred in that they are not only excellent in viscoelasticity since they do not deteriorate the resin flow property, but also have no starting point of stress concentration and thus provide high impact resistance.

As commercially available polyamide particles, for example, SP-500, SP-10, TR-1, TR-2, 842P-48, and 842P-80 (which are manufactured by Toray Industries, Inc.), and "ORGASOL" (registered trademark) 1002D, 2001UD, 2001EXD, 2002D, 3202D, 3501D, and 3502D (which are manufactured by Arkema K.K.) can be used. These polyamide particles may be used singly, or in combination of two or more thereof.

The epoxy resin composition of the present invention may contain, for example, a coupling agent, thermosetting resin particles, or an inorganic filler such as silica gel, carbon black, clay, carbon nanotubes, graphene, carbon particles, or metal powder, within a range that does not impair the effects of the present invention.

The prepreg of the present invention is obtained by reinforcing fibers with the epoxy resin composition of the present invention. In other words, the prepreg of the present invention is obtained by using the above-described epoxy resin composition as a matrix resin and combining the epoxy resin composition with reinforcing fibers. Preferred examples of the reinforcing fibers include carbon fibers, graphite fibers, aramid fibers, and glass fibers. Thereamong, carbon fibers are particularly preferred. The carbon fibers preferably have a tensile modulus in a range of 200 to 440 GPa. In this range, a carbon fiber-reinforced composite material is provided with both stiffness and strength that are well-balanced at a high level, which is preferred. The carbon fibers preferably have a tensile elongation in a range of 0.8 to 3.0%. It is noted here that the tensile modulus and the tensile elongation are values measured in accordance with JIS R7601-2006.

Examples of commercially available carbon fibers include "TORAYCA" (registered trademark) T800G-24K, "TORAYCA" (registered trademark) T800S-24K, "TORAYCA" (registered trademark) T700G-24K, "TORAYCA" (registered trademark) T300-3K, and "TORAYCA" (registered trademark) T700S-12K (all of which are manufactured by Toray Industries, Inc.).

The form and the arrangement of the carbon fibers can be selected as appropriate from those of long fibers aligned in one direction, a woven fabric, and the like. In order to obtain a carbon fiber-reinforced composite material that is lightweight and has a higher level of durability, the carbon fibers are preferably in the form of continuous fibers, such as long fibers aligned in one direction (fiber bundles) or a woven fabric. The prepreg of the present invention can be produced by various known methods. The prepreg can be produced by, for example, a wet process in which a matrix resin is dissolved in

an organic solvent to reduce the viscosity and then impregnated into reinforcing fibers, or a hot-melt process in which a matrix resin is heated to reduce the viscosity without using an organic solvent and then impregnated into reinforcing fibers. In the wet process, the reinforcing fibers are immersed in a liquid containing the matrix resin and then pulled out, after which the organic solvent is evaporated using an oven or the like, whereby the prepreg can be obtained.

In the hot-melt process, for example, a method of directly impregnating the reinforcing fibers with the matrix resin that has been reduced in viscosity by heating, or a method of first preparing a release paper sheet provided with a resin film obtained by once coating the matrix resin onto a release paper or the like, subsequently putting the resin film on the reinforcing fibers from either or both sides, and then heat-pressing the resultant to impregnate the reinforcing fibers with the matrix resin may be employed.

As a method for producing the prepreg of the present invention, a hot-melt process of impregnating the reinforcing fibers with the matrix resin without using an organic solvent is preferred since the resulting prepreg contains substantially no residual organic solvent.

In the prepreg of the present invention, the amount of the reinforcing fibers per unit area is preferably 30 to 2,000 $g/m^2$. When the amount of the reinforcing fibers is 30 $g/m^2$ or more, the number of layers to be laminated for obtaining a prescribed thickness at the time of molding a fiber-reinforced composite material can be reduced, so that the operation is likely to be simple. Meanwhile, when the amount of the reinforcing fibers is 2,000 $g/m^2$ or less, drapability of the prepreg is likely to be improved.

The fiber mass content of the prepreg of the present invention is preferably 30 to 90% by mass, more preferably 35 to 85% by mass, still more preferably 40 to 80% by mass. When the fiber mass content is 30% by mass or more, the amount of the resin is not excessively large, so that not only advantages of a fiber-reinforced composite material excellent in specific strength and specific elastic modulus are likely to be obtained, but also the amount of heat generation during curing is unlikely to be excessively high at the time of molding the fiber-reinforced composite material. Meanwhile, when the fiber mass content is 90% by mass or less, defective impregnation of the resin hardly occurs, so that the resulting fiber-reinforced composite material is likely to have fewer voids.

A first aspect of the fiber-reinforced composite material of the present invention is a fiber-reinforced composite material obtained by curing the prepreg of the present invention. The fiber-reinforced composite material of this aspect can be produced by, for example, a method in which the prepreg of the present invention is laminated in a prescribed form and then pressed and heated to cure the resin. As a method of applying heat and pressure in this process, for example, a press molding method, an autoclave molding method, a bag molding method, a wrapping tape method, or an internal pressure molding method is employed.

A second aspect of the fiber-reinforced composite material of the present invention is a fiber-reinforced composite material that contains: a cured epoxy resin obtained by curing the epoxy resin composition of the present invention; and reinforcing fibers. The fiber-reinforced composite material of this aspect can be produced by a method in which the reinforcing fibers are directly impregnated with the epoxy resin composition of the present invention and then heat-cured without going through a prepreg-forming stage, for example, a molding method such as a hand lay-up method, a filament winding method, a pultrusion method, a resin injection molding method, or a resin transfer molding method.

It is noted here that the upper limits and the lower limits of the above-described numerical ranges can be arbitrarily combined.

## Examples

The present invention will now be described in more detail by way of Examples. It is noted here, however, that the scope of the present invention is not limited to the below-described Examples. Unless otherwise specified, the unit "part(s)" used for composition ratio means part(s) by mass. Further, unless otherwise specified, various properties (physical properties) were measured in an environment having a temperature of 23°C and a relative humidity of 50%.

<Raw Materials Used in Examples and Comparative Examples>

(1) Constituent [A']

"SUMI-EPOXY" (registered trademark) ELM434 (tetraglycidyl-4,4'-diaminodiphenylmethane, manufactured by Sumitomo Chemical Co., Ltd.), epoxy equivalent weight: 122 g/eq; an epoxy resin having four epoxy groups in one molecule

3,4'-TGDDE (tetraglycidyl-3,4'-diaminodiphenyl ether, manufactured by Toray Fine Chemicals Co., Ltd.), epoxy equivalent weight: 106 g/eq; an epoxy resin having four epoxy groups in one molecule

4,4'-TGDDE (tetraglycidyl-4,4'-diaminodiphenyl ether, manufactured by Toray Fine Chemicals Co., Ltd.), epoxy

equivalent weight: 106 g/eq; an epoxy resin having four epoxy groups in one molecule

(2) Epoxy Resins Other Than Constituent [A']

"DENACOL" (registered trademark) EX-142 (*o*-phenylphenolglycidyl ether, manufactured by Nagase ChemteX Corporation), epoxy equivalent weight: 240 g/eq; a monofunctional epoxy resin having one epoxy group in one molecule
TOREPA-204E (*N*,*N*-diglycidyl-*p*-phenoxyaniline, manufactured by Toray Fine Chemicals Co., Ltd.), an epoxy resin having two epoxy groups in one molecule, epoxy equivalent weight: 162 g/eq; an epoxy resin having two epoxy groups in one molecule
"EPICLON" (registered trademark) HP4770 (bisnaphthalene-type epoxy resin, manufactured by DIC Corporation), epoxy equivalent weight: 205 g/eq; an epoxy resin having two epoxy groups in one molecule

(3) Constituent [B]

*p*-cumylphenol (manufactured by Mitsui Fine Chemicals, Inc.), active hydrogen equivalent weight derived from phenolic hydroxyl group: 212 g/eq; a hydroxyphenyl compound
$\beta$-naphthol (manufactured by Mitsui Fine Chemicals, Inc.), active hydrogen equivalent weight derived from phenolic hydroxyl group: 144 g/eq; a naphthol compound
ANTAGE SP (styrenated phenol, manufactured by Kawaguchi Chemical Industry Co., Ltd.), active hydrogen equivalent weight derived from phenolic hydroxyl group: 308 g/eq; a hydroxyphenyl compound
TBP (tribenzylphenol, manufactured by Kawaguchi Chemical Industry Co., Ltd.), active hydrogen equivalent weight derived from phenolic hydroxyl group: 348 g/eq; a hydroxyphenyl compound
2,3,6-TMP (2,3,6-trimethylphenol, manufactured by Honshu Chemical Industry Co., Ltd.), active hydrogen equivalent weight derived from phenolic hydroxyl group: 136 g/eq; a hydroxyphenyl compound
3M6B (3-methyl-6-*tert*-butylphenol, manufactured by Honshu Chemical Industry Co., Ltd.), active hydrogen equivalent weight derived from phenolic hydroxyl group: 164 g/eq; a hydroxyphenyl compound

(4) Phenol Other Than Constituent [B]

bisphenol F (manufactured by Tokyo Chemical Industry Co., Ltd.), active hydrogen equivalent weight derived from phenolic hydroxyl group: 100 g/eq; a phenol compound having two phenolic hydroxyl groups in one molecule (5) Constituent [C]
SEIKACURE-S (4,4'-diaminodiphenyl sulfone, melting point: 178°C, manufactured by Seika Corporation), active hydrogen equivalent weight derived from amino group: 62 g/eq

(6) Constituent [D]

"TPP-MK" (registered trademark) (tetraphenylphosphonium tetra-*p*-tolyl borate, manufactured by Hokko Chemical Industry Co., Ltd.)
"HOKKO TPP" (registered trademark) (triphenyl phosphine, manufactured by Hokko Chemical Industry Co., Ltd.)

(7) Constituent [E]

"SUMIKA EXCEL" (registered trademark) PES2603MP (polyether sulfone, manufactured by Sumitomo Chemical Co., Ltd.)

(8) Constituent [F]

Carbon fiber "TORAYCA" (registered trademark) T800SC-24k-10E fiber (tensile strength: 5.9 GPa, tensile

modulus: 294 GPa, elongation: 2.0%, manufactured by Toray Industries, Inc.)

<Production and Evaluation Methods>

(9) Preparation of Epoxy Resin Compositions (Comparative Examples 1 to 13 and 15 to 22, Heat-treatment step of allowing the constituents [A'] and [B] to react in advance: absent)

In accordance with the respective blending ratios shown in Tables 2-1 and 2-2 (unit in Tables: parts by mass), the components other than the constituents [C] and [D] were added in prescribed amounts without allowing the constituents [A'] and [B] to react in advance by a heat treatment, and the resultants were each heated to 130°C with kneading and further kneaded at 130°C for 30 minutes to obtain viscous liquids. Subsequently, the thus obtained viscous liquids were cooled to 70°C with kneading, after which prescribed amounts of the constituents [C] and [D] were added and the resultants were further kneaded, whereby epoxy resin compositions were obtained.

(10) Preparation of Epoxy Resin Compositions (Examples 1 to 25 and Comparative Example 14; Heat-treatment step of allowing the constituents [A'] and [B] to react in advance: present)

In accordance with the respective blending ratios shown in Tables 1-1, 1-2, 1-3, and 2-2 (unit in Tables: parts by mass), the components other than the constituents [C] were added in prescribed amounts and then heated to 130°C with kneading, and a heat treatment of kneading each resultant was performed at 130°C for 1 hour to obtain viscous liquids. Since the epoxy groups of the constituent [A'] used as a raw material were in excess of the phenolic hydroxyl groups of the constituent [B], it is believed that the phenolic hydroxyl groups derived from the constituent [B], not the epoxy groups, were almost completely consumed, and it can thus be judged that the products (Examples 1 to 25 in Tables 1-1, 1-2, and 1-3) contained substantially no unreacted constituent [B]; therefore, the products obtained by the heat treatment were defined as epoxy resin compositions ("Compositions after pre-heat treatment" shown in Tables 1 and 2). Analysis based on $^1$H-NMR measurement confirmed that the products each contained an epoxy resin (corresponding to the constituent [A], particularly the structure represented by any of Formulae (VI) to (VIII)) in which one or two of the four or more epoxy groups of the constituent [A'] had reacted with the phenolic hydroxyl groups of the constituent [B]. When DSC measurement was performed from 20°C to 180°C at a heating rate of 5°C/min for the compositions obtained before the heat treatment and the compositions obtained after the heat treatment, it was found that the exothermic reaction peak attributed to the reaction between the epoxy groups of the constituent [A'] and the phenolic hydroxyl groups of the phenolic hydroxyl groups of the constituent [B], which peak was observed before the heat treatment, disappeared after the heat treatment, and the ratio of the amount of heat generation after the heat-treatment step with respect to the amount of heat generation before the same step was 0.05 or lower (the reaction rate of the constituent [B] was 95% or higher) in all of Examples. Further, the results of determining the content of the constituent [A'] and that of the constituent [A] by HPLC measurement were as shown in Tables 1-1, 1-2, 1-3, and 2-2.

Subsequently, the products were cooled to 70°C with kneading, after which a prescribed amount of the constituent [C] was added and the resultants were further kneaded, whereby epoxy resin compositions were obtained.

(11) Preparation of Epoxy Resin Compositions in Which Constituent [E] Was Dissolved in Constituent [A'] (Comparative Examples 23 to 27)

In accordance with the respective blending ratios shown in Table 3 (unit in Table 3: parts by mass), the components were added in prescribed amounts, and the resultants were each heated to 150°C with kneading and further kneaded at 150°C for 1 hour to obtain viscous liquids.

(12) Production of Cured Epoxy Resins

The epoxy resin compositions prepared in accordance with the above-described (9) and (10) were each degassed in vacuum, subsequently heated from 30°C to 180°C at a rate of 1.7°C/min in a mold set to a thickness of 2 mm using a 2-mm thick "TEFLON" (registered trademark) spacer, and then cured at 180°C for 2 hours to obtain 2-mm thick plate-shaped cured resins.

(13) Measurement of Flexural Modulus of Cured Resins Under Room Temperature-Dry Condition

From each of the cured resins produced in accordance with the above-described (12), rectangular test pieces of 10 mm in width and 60 mm in length were cut out, and three-point bending was performed in accordance with JIS K7171(1994) using an INSTRON Universal Tester (manufactured by Instron Corporation) under the following conditions:

span = 32 mm, crosshead speed = 2.5 mm/min, number of samples n = 6, and load range for measuring elastic modulus = 5 to 30N. An average value of the thus measured elastic modulus was defined as the flexural modulus of each cured resin under a room temperature-dry condition.

(14) Measurement of Flexural Modulus of Cured Resins Under Hot-Wet Condition

Rectangular test pieces of 10 mm in width and 60 mm in length were cut out from each of the cured resins produced in accordance with the above-described (12), and immersed in 98°C boiling water for 24 hours, after which three-point bending was performed using an INSTRON Universal Tester (manufactured by Instron Corporation) under the same conditions as in (13), except that the measurement temperature was 82°C. An average value of the thus measured elastic modulus was defined as the flexural modulus of each cured resin under a hot-wet condition. A flexural modulus of 2.8 GPa or more, which is believed to bring about a sufficient effect for improving the compressive strength of a fiber-reinforced composite material under a hot-wet condition, was deemed to be acceptable.

(15) Measurement of Rubbery State Elastic Modulus of Cured Resins

A rectangular piece of 10 mm in width and 35 mm in length was cut out from each of the cured resins produced in accordance with the above-described (12) to obtain a test piece. Using a bending DMA (Q800, manufactured by TA Instruments Inc.), the storage elastic modulus G' was measured by heating the test piece from 30°C to 320°C under the following conditions: measurement frequency = 1.0 Hz, heating rate = 5°C/min, strain = 0.1%, a single cantilever mode, and chuck distance = 17.8 mm. In a storage elastic modulus change curve obtained by plotting log G' on the ordinate and temperature on the abscissa, the temperature at an intersection of extensions of linear parts of two regions that can be regarded as straight lines before and after a sharp drop of the log G' caused by the heating was defined as the glass transition temperature, and the value of G' at a temperature higher than the glass transition temperature by 50°C or more, and at which the log G' can be deemed to be flat, was defined as the rubbery state elastic modulus. The linear parts of two regions are the region before a sharp decrease in the storage elastic modulus caused by the heating and the linear or substantially linear region represented by a region that appears in the process of the sharp decrease in the storage elastic modulus. A rubbery state elastic modulus of 24 MPa or less, which is observed with a sufficient effect for improving the fiber strength translation rate, was deemed to be acceptable.

(16) Measurement of Water Absorption Coefficient of Cured Resins

Three rectangular pieces of 10 mm in width and 35 mm in length were cut out from each of the cured resins produced in accordance with the above-described (12) to obtain test pieces. For these test pieces, the mass before immersion in 98°C boiling water and the mass after 48-hour immersion in 98°C boiling were measured, and the water absorption coefficient of each cured resin was calculated by the following equation. An average value of the three test pieces was defined as the water absorption coefficient of the cured resin.

Water Absorption Coefficient (%) = (Mass of test piece after immersion - Mass of test piece before immersion)/(Mass of test piece before immersion) × 100 (17) Measurement of Viscosity of Epoxy Resin Compositions After Being Retained at 80°C for 1 Minute and 3 Hours

The viscosity of each epoxy resin composition was measured using a dynamic viscoelasticity measuring device ARES-G2 (manufactured by TA Instruments Inc.). A flat parallel plate having a diameter of 25 mm and a flat parallel plate having a diameter of 40 mm, which were used as upper and lower measuring jigs, respectively, were heated to 70°C, and the epoxy resin composition was subsequently set between the upper and the lower measuring jigs such that the distance between these jigs was 1 mm, after which the measurement was performed at an angular frequency of 10 rad/s. The "viscosity measured 1 minute after being heated from 70°C to 80°C at a rate of 2.0°C/min and reaching 80°C" and the "viscosity measured after being heated from 70°C to 80°C at a rate of 2.0°C/min, reaching 80°C, and then being retained for 3 hours" were defined as $\eta^*_1$ and $\eta^*_{180}$, respectively, and the viscosity increase ratio was calculated by $\eta^*_{180}/\eta^*_1$. It is noted here that the "viscosity" refers to a complex viscosity $\eta^*$ in dynamic viscoelasticity measurement.

(18) Measurement of Volatile Content of Epoxy Resin Compositions

On an aluminum cup (the exact mass of the aluminum cup was defined as $W_0$), about 5 g of each epoxy resin composition prepared in accordance with the above-described (8) or (9) (the exact mass of the resin composition was defined as $W_1$) was thinly spread in a circular shape of about 4 cm in diameter, and this aluminum cup was left to stand in a stationary state for 30 minutes in a hot-air dryer set at 160°C and then cooled to 25°C in a desiccator, after which the total mass $W_2$ of the aluminum cup and the epoxy resin composition was measured. The mass $W_3$ of the resin composition after being left to stand at 160°C for 30 minutes was calculated by $W_2$ - $W_0$. Using the following equation, the volatile content (%

by mass) of the epoxy resin composition was calculated.

$$\text{Volatile content (\% by mass)} = (W_1 - W_3)/W_1 \times 100$$

(19) Measurement of Viscosity at 20°C and 100°C of Epoxy Resin Compositions Before Kneading with Constituent [C]

The viscosity at 20°C and 100°C of each epoxy resin composition obtained by the heat treatment performed in advance in the above-described (10), to which the constituent [C] had not been added, was measured using a dynamic viscoelasticity measuring device ARES-G2 (manufactured by TA Instruments Inc.). Using the same measuring jigs as in (17), the epoxy resin composition was set between the upper and the lower jigs such that the distance between these jigs was 1 mm, after which the dynamic viscoelasticity from 15°C to 105°C was measured with heating at an angular frequency of 10 rad/s and a rate of 2.0°C/min, and the viscosity at 20°C and that at 100°C were determined in this process.

(Examples 1 to 25 and Comparative Examples 1 to 22)

In accordance with the respective blending ratios shown in Tables 1-1, 1-2, 1-3, 2-1, and 2-2, epoxy resin compositions were prepared by the above-described procedure (9) or (10), and cured resins were obtained by the above-described procedure (12). The measurements of (17) and (18) were performed for the epoxy resin compositions, and the measurements of (13) to (16) were performed for the cured epoxy resins.

The measurement results were as shown in Tables 1-1, 1-2, 1-3, 2-1, and 2-2.

[Table 1-1]

| | | | Example 1 | Example 2 | Example 3 | Example 4 | Example 5 | Example 6 | Example 7 | Example 8 |
|---|---|---|---|---|---|---|---|---|---|---|
| Compositions before Pre-Heat Treatment | Constituent [A'] | "SUMI-EPOXY" (Reg. TM) ELM434 | 100 | 100 | | 100 | 100 | 100 | 100 | 100 |
| | | 3,4'-TGDDE | | | 100 | | | | | |
| | | 4,4'-TGDDE | | | | | | | | |
| | Constituent [B] | p-cumyl phenol | 15 | 17 | 17 | 24 | 35 | 40 | | |
| | | β-naphthol | | | | | | | 13 | 24 |
| | | ANT AGE SP | | | | | | | | |
| | | TBP | | | | | | | | |
| | | 2, 3, 6-TMP | | | | | | | | |
| | | 3M6B | | | | | | | | |
| | Constituent [D] | TPP-MK | 0.8 | 0.8 | 0.8 | 0.8 | 0.8 | 0.8 | 0.8 | 0.8 |
| | | TPP | | | | | | | | |
| Compositions after Pre-Heat Treatment | Constituent [A'] | "SUMI-EPOXY" (Reg. TM) ELM434 | 90 | 90 | 90 | 86 | 80 | 77 | 92 | 76 |
| | | 3,4'-TGDDE | | | | | | | | |
| | | 4,4'-TGDDE | | | | | | | | |
| | Constituent [A] | | 25 | 27 | 27 | 38 | 55 | 63 | 21 | 48 |
| | Constituent [D] | TPP-MK | 0.8 | 0.8 | 0.8 | 0.8 | 0.8 | 0.8 | 0.8 | 0.8 |
| | | HOKKO TPP | | | | | | | | |
| Component to be kneaded in Compositions after Pre-Heat Treatment | Constituent [C] | SEIKACURE-S | 47 | 46 | 50 | 44 | 41 | 39 | 46 | 41 |
| Presence or Absence of Pre-Heat Treatment | | | Present | Present | Present | Present | Present | Present | Present | Present |
| Compositions after Pre-Heat Treatmet (before kneading [C]) | Viscosity at 20°C (Pa ·s) | | $1.0\times10^4$ to $1.0\times10^5$ | $5.0\times10^4$ to $5.0\times10^5$ | $5.0\times10^4$ to $5.0\times10^5$ | $1.0\times10^5$ to $1.0\times10^6$ | $1.0\times10^7$ to $1.0\times10^8$ | - | $1.0\times10^4$ to $1.0\times10^5$ | $5.0\times10^4$ to $5.0\times10^5$ |
| | Viscosity at 100°C (Pa ·s) | | 0.37 | 0.45 | 0.45 | 0.65 | 1.0 | - | 0.34 | 0.51 |

(continued)

| | | Example 1 | Example 2 | Example 3 | Example 4 | Example 5 | Example 6 | Example 7 | Example 8 |
|---|---|---|---|---|---|---|---|---|---|
| EpoxyResin Compositions | Ratio of Constituent [A'] in Total Epoxy Resins (mass%) | 78 | 77 | 77 | 69 | 59 | 55 | 81 | 61 |
| | Ratio of Constituent [A] in Total Epoxy Resins (mass%) | 22 | 23 | 23 | 31 | 41 | 45 | 19 | 39 |
| | Volatile Content (mass%) | 0.2> | 0.2> | 0.2> | 0.2> | 0.2> | 0.2> | 0.2> | 0.2> |
| | Viscosity Increase Ratio after Retention 3 Hrs at 80°C (fold) | 1.2 | 1.2 | 1.2 | 1.2 | 1.2 | 1.2 | 1.2 | 1.2 |
| Cured Resins | Flexural Modulus under RT/DryCondition (GPa) | 3.8 | 3.9 | 4.0 | 4.0 | 4.1 | 4.2 | 4.1 | 4.3 |
| | Flexural Modulus under High Temp./Humid Condition (GPa) | 2.9 | 3.0 | 3.1 | 3.0 | 3.0 | 2.9 | 2.9 | 3.0 |
| | Water Absorption Coefficient (%) | 3.5 | 3.3 | 3.1 | 3.2 | 3.1 | 3.0 | 3.7 | 3.3 |
| | Rubbery State Elastic Modulus (MPa) | 22 | 20 | 20 | 15 | 6 | 4 | 24 | 11 |

[Table 1-2]

| | | | Example 9 | Example 10 | Example 11 | Example 12 | Example 13 | Example 14 | Example 15 | Example 16 |
|---|---|---|---|---|---|---|---|---|---|---|
| Compositions before Pre-Heat Treatment | Constituent [A'] | "SUMI-EPOXY" (Reg. TM) ELM434 | 100 | 100 | 100 | 100 | 100 | 100 | | 100 |
| | | 3,4'-TGDDE | | | | | | | 100 | |
| | | 4,4'-TGDDE | | | | | | | | |
| | Constituent [B] | p-cumyl phenol | | | | | | | | |
| | | β-naphthol | | | | | | | | |
| | | ANTAGE SP | 25 | 38 | | | | | | |
| | | TBP | | | 24 | 37 | | | | |
| | | 2, 3, 6-TMP | | | | | 11 | 15 | 16 | 18 |
| | | 3M6B | | | | | | | | |
| | Constituent [D] | TPP-MK | 0.8 | 0.8 | 0.8 | 0.8 | 0.8 | | 0.8 | 0.8 |
| | | TPP | | | | | | 0.8 | | |
| Compositions after Pre-Heat Treatment | Constituent [A'] | "SUMI-EPOXY" (Reg. TM) ELM434 | 90 | 85 | 89 | 87 | 90 | 87 | | 84 |
| | | 3,4'-TGDDE | | | | | | | 86 | |
| | | 4,4'-TGDDE | | | | | | | | |
| | Constituent [A] | | 35 | 53 | 35 | 50 | 21 | 28 | 30 | 34 |
| | Constituent [D] | TPP-MK | 0.8 | 0.8 | 0.8 | 0.8 | 0.8 | | 0.8 | 0.8 |
| | | HOKKO TPP | | | | | | 0.8 | | |
| Component to be kneaded in Composition after Pre-Heat Treatment | Constituent [C] | SEIKACURE-S | 46 | 43 | 46 | 44 | 46 | 46 | 49 | 43 |
| Presence or Absence of Pre-Heat Treatment | | | Present | Present | Present | Present | Present | Present | Present | Present |

(continued)

| | | Example 9 | Example 10 | Example 11 | Example 12 | Example 13 | Example 14 | Example 15 | Example 16 |
|---|---|---|---|---|---|---|---|---|---|
| Compositions after Pre-Heat Treatmet (before kneading [C]) | Viscosity at 20°C (Pa ·s) | $1.0\times10^5$ to $1.0\times10^6$ | $5.0\times10^5$ to $5.0\times10^5$ | $1.0\times10^6$ to $1.0\times10^6$ | $5.0\times10^5$ to $5.0\times10^5$ | $5.0\times10^4$ to $5.0\times10^5$ | $1.0\times10^5$ to $1.0\times10^6$ | $1.0\times10^5$ to $1.0\times10^6$ | $5.0\times10^5$ to $5.0\times10^6$ |
| | Viscosity at 100°C (Pa ·s) | 0.75 | 1.2 | 0.70 | 1.1 | 0.65 | 0.80 | 0.81 | 0.91 |
| Epoxy Resin Compositions | Ratio of Constituent [A'] in Total Epoxy Resins (mass%) | 72 | 62 | 74 | 64 | 81 | 76 | 73 | 72 |
| | Ratio of Constituent [A] in Total Epoxy Resins (mass%) | 28 | 38 | 26 | 36 | 19 | 24 | 27 | 28 |
| | Volatile Content (mass%) | 0.2> | 0.2> | 0.2 > | 0.2> | 0.2> | 0.2> | 0.2> | 0.2> |
| | Viscosity Increase Ratio after Reterntion 3 Hrs at 80°C (fold) | 1.2 | 1.2 | 1.2 | 1.2 | 1.2 | 1.2 | 1.2 | 1.2 |
| Cured Resins | Flexural Modulus under RT/Dry Condition (GPa) | 4.0 | 4.1 | 4.0 | 4.1 | 4.0 | 4.1 | 4.2 | 4.1 |
| | Flexural Modulus under High Temp./Humid Condition (GPa) | 2.8 | 2.8 | 2.8 | 2.8 | 2.9 | 2.9 | 3.0 | 3.0 |
| | Water Absorption Coefficient (%) | 3.3 | 3.4 | 3.7 | 3.4 | 3.4 | 3.4 | 3.2 | 3.3 |
| | RubberyState Elastic Modulus (MPa) | 21 | 15 | 23 | 13 | 23 | 21 | 21 | 20 |

[Table 1-3]

| | | | Example 17 | Example 18 | Example 19 | Example 20 | Example 21 | Example 22 | Example 23 | Example 24 | Example 25 |
|---|---|---|---|---|---|---|---|---|---|---|---|
| Compositions before Pre-Heat Treatment | Constituent [A'] | "SUM I-EPOXY' (Reg. TM) ELM434 | | 100 | 100 | 100 | 100 | | 100 | | 100 |
| | | 3,4'-TGDDE | | | | | | 100 | | | |
| | | 4,4'-TGDDE | 100 | | | | | | | 100 | |
| | Constituent [B] | p-cumyl phenol | | | | | | | | | |
| | | β-naphthol | | | | | | | | | |
| | | ANTAGE SP | | | | | | | | | |
| | | TBP | | | | | | | | | |
| | | 2,3,6-TMP | 21 | 25 | 35 | | | | | | |
| | | 3M6B | | | | 12 | 20 | 21 | 27 | 35 | 35 |
| | Constituent [D] | TPP-MK | 0.8 | 0.8 | 0.8 | 0.8 | 0.8 | 0.8 | 0.8 | 0.8 | 0.8 |
| | | TPP | | | | | | | | | |
| Compositions after Pre-Heat Treatment | Constituent [A'] | "SUM I-EPOXY' (Reg. TM) ELM434 | 81 | 77 | 69 | 91 | 85 | | 80 | 74 | 74 |
| | | 3,4'-TGDDE | | | | | | 84 | | | |
| | | 4,4'-TGDDE | | | | | | | | | |
| | Constituent [A] | | 39 | 48 | 65 | 21 | 35 | 36 | 47 | 61 | 61 |
| | Constituent [D] | TPP-MK | 0.8 | 0.8 | 0.8 | 0.8 | 0.8 | 0.8 | 0.8 | 0.8 | 0.8 |
| | | HOKKO TPP | | | | | | | | | |
| Component to be kneaded in Composition after Pre-Heat Treatment | Constituent [C] | SEIKACURE-S | 49 | 39 | 35 | 46 | 43 | 49 | 41 | 45 | 38 |
| Presence or Absence of Pre-Heat Treatment | | | Present | Present | Present | Present | Present | Present | Present | Present | Present |

(continued)

| | | Example 17 | Example 18 | Example 19 | Example 20 | Example 21 | Example 22 | Example 23 | Example 24 | Example 25 |
|---|---|---|---|---|---|---|---|---|---|---|
| Compositions after Pre-Heat Treatmet (before kneading [C]) | Viscosity at 20°C (Pa ·s) | $5.0\times10^5$ to $5.0\times10^6$ | $1.0\times10^6$ to $1.0\times10^7$ | - | $1.0\times10^5$ to $1.0\times10^6$ | $5.0\times10^5$ to $5.0\times10^6$ | $5.0\times10^5$ to $5.0\times10^6$ | $1.0\times10^6$ to $1.0\times10^7$ | - | - |
| | Viscosity at 100°C (Pa ·s) | 0.95 | 1.2 | - | 0.70 | 1.2 | 1.2 | 2.0 | - | - |
| Epoxy Resin Compositions | Ratio of Constituent [A'] in Total Epoxy Resins (mass%) | 67 | 62 | 51 | 81 | 71 | 69 | 63 | 55 | 55 |
| | Ratio of Constituent [A] in Total Epoxy Resins (mass%) | 33 | 38 | 49 | 19 | 29 | 31 | 37 | 45 | 45 |
| | Volatile Content (mass%) | 0.2> | 0.2 > | 0.2> | 0.2> | 0.2> | 0.2 > | 0.2> | 0.2> | 0.2> |
| | Viscosity Increase Ratio after Retention 3 Hrs at 80°C (fold) | 1.2 | 1.2 | 1.2 | 1.2 | 1.2 | 1.2 | 1.2 | 1.2 | 1.2 |
| Cured Resins | Flexural Modulus under RT/DryCondition (GPa) | 4.2 | 4.2 | 4.2 | 4.0 | 4.1 | 4.2 | 4.2 | 4.2 | 4.2 |
| | Flexural Modulus under High Temp./Humid Condition (GPa) | 3.0 | 3.0 | 2.8 | 2.9 | 3.0 | 3.1 | 3.1 | 3.0 | 3.0 |
| | Water Absorption Coefficient (%) | 3.3 | 3.3 | 3.1 | 3.4 | 3.3 | 3.1 | 3.1 | 3.0 | 3.0 |
| | Rubbery State Elastic Modulus (MPa) | 15 | 13 | 6 | 23 | 22 | 21 | 11 | 6 | 6 |

[Table 2-1]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Constituent [A'] | "SUMI-EPOXY" (Reg. TM) ELM434 | 100 | 100 | | 100 | 100 | 100 | 100 | 100 | 100 | |
| | 3,4'-TGDDE | | | 100 | | | | | | | 100 |
| | 4,4'-TGDDE | | | | | | | | | | |
| Epoxy Resins other than Constituent [A'] | TOREP A-204E | | | | | | | | | | |
| | "EPICLON" (Reg. TM) HP4770 | | | | | | | | | | |
| | "DENACOL" (Reg. TM) EX-142 | | | | | | | | | | |
| Constituent [B] | p-cumyl phenol | 15 | 17 | 17 | 24 | 35 | 40 | | | | |
| | β-naphthol | | | | | | | 13 | 24 | | |
| | ANTAGE SP | | | | | | | | | | |
| | TBP | | | | | | | | | | |
| | 2, 3, 6-TMP | | | | | | | | | | |
| | 3M6B | | | | | | | | | | |
| Phenol other than Constituent [B] | Bisphenol F | | | | | | | | | | |
| Constituent [C] | SEIKACURE-S | 47 | 46 | 50 | 44 | 41 | 39 | 46 | 41 | 49 | 53 |
| Constituent [D] | TPP-MK | 0.8 | 0.8 | 0.8 | 0.8 | 0.8 | 0.8 | 0.8 | 0.8 | 0.8 | 0.8 |
| | HOKKO TPP | | | | | | | | | | |
| Presence or Absence of Pre-Heat Treatment | | Absent | Absent | Absent | Absent | Absent | Absent | Absent | Absent | - | - |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Epoxy Resin Compositions | Volatile Content (mass%) | 0.2 | 0.2 | 0.2 | 0.2 | 0.2 | 0.2 | 0.2 | 0.2 | 0.2 | 0.2 |
| | Viscosity Increase Ratio after Retention 3 Hrs at 80°C (fold) | 4< | 4< | 4< | 4< | 4< | 4< | 4< | 4< | 1.2 | 1.2 |
| Cured Resins | Flexural Modulus under RT/Dry Condition (GPa) | 3.8 | 3.9 | 4.0 | 4.0 | 4.1 | 4.2 | 4.1 | 4.3 | 3.7 | 3.8 |
| | Flexural Modulus under High Temp./Humid Condition (GPa) | 2.9 | 3.0 | 3.1 | 3.0 | 3.0 | 2.9 | 2.9 | 3.0 | 2.7 | 2.8 |
| | Water Absorption Coefficient (%) | 3.5 | 3.3 | 3.1 | 3.2 | 3.1 | 3.0 | 3.7 | 3.3 | 4.4 | 4.2 |
| | Rubbery State Elastic Modulus (MPa) | 22 | 20 | 20 | 15 | 6 | 4 | 24 | 11 | 45< | 45< |

[Table 2-2]

| | | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 | Comparative Example 20 | Comparative Example 21 | Comparative Example 22 |
|---|---|---|---|---|---|---|---|---|---|---|---|---|---|
| Constituent [A'] | "SUMI-EPOXY" (Reg. TM) ELM434 | 80 | 80 | 80 | 100 | 100 | 100 | | 100 | | 100 | 100 | 100 |
| | 3,4'-TGDDE | | | | | | | | | 100 | | | |
| | 4,4'-TGDDE | | | | | | | 100 | | | | | |
| Epoxy Resins other than Constituent [A'] | TOREP A-204E | 20 | | | | | | | | | | | |
| | "EPICLON" (Reg. TM) HP4770 | | 20 | | | | | | | | | | |
| | "DENACOL" (Reg. TM) EX-142 | | | 20 | | | | | | | | | |
| Constituent [B] | p-cumyl phenol | | | | | | | | | | | | |
| | β-naphthol | | | | | | | | | | | | |
| | ANT AGE SP | | | | | 25 | | | | | | | |
| | TBP | | | | | | 24 | | | | | | |
| | 2, 3, 6-TMP | | | | | | | 18 | 18 | 18 | 25 | | |
| | 3M6B | | | | | | | | | | | 20 | 27 |
| Phenol other than Constituent | Bisphenol F | | | | 16 | | | | | | | | |
| Constituent [C] | SEIKACURE-S | 48 | 49 | 48 | 41 | 46 | 46 | 49 | 43 | 49 | 39 | 43 | 41 |
| Constituent Element [D] | TPP-MK | 0.8 | 0.8 | 0.8 | 0.8 | 0.8 | 0.8 | 0.8 | 0.8 | 0.8 | 0.8 | 0.8 | 0.8 |
| | HOKKO TPP | | | | | | | | | | | | |
| Presence or Absence of Pre-Heat Treatment | | - | - | - | Present | Absent | Absent | Absent | Absent | Absent | Absent | Absent | Absent |

(continued)

| | | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 | Comparative Example 20 | Comparative Example 21 | Comparative Example 22 |
|---|---|---|---|---|---|---|---|---|---|---|---|---|---|
| Epoxy Resin Compositions | Volatile Content (mass%) | 0.5 | 0.2 > | 3.0 < | 0.2 > | 0.2 | 0.2 | 0.2 | 0.2 | 0.2 | 0.2 | 0.2 | 0.2 |
| | Viscosity Increase Ratio after Retention 3 Hrs at 80°C (fold) | 1.2 | 1.2 | - | - | 4< | 4< | 4< | 4< | 4< | 4< | 4< | 4< |
| Cured Resins | Flexural Modulus under RT/Dry Condition (GPa) | 3.9 | 3.7 | - | 3.6 | 4.0 | 4.0 | 4.1 | 4.1 | 4.1 | 4.2 | 4.1 | 4.2 |
| | Flexural Modulus under High Temp./Humid Condition (GPa) | 3.0 | 2.8 | - | 2.6 | 2.8 | 2.8 | 3.0 | 3.0 | 3.0 | 3.0 | 3.0 | 3.1 |
| | Water Absorption Coefficient (%) | 4.0 | 4.1 | - | 4.1 | 3.3 | 3.8 | 3.3 | 3.3 | 3.3 | 3.3 | 3.3 | 3.1 |
| | Rubbery State Elastic Modulus (MPa) | 30 | 36 | - | 43 | 21 | 24 | 20 | 20 | 20 | 13 | 22 | 11 |

<Examples 1 to 25 and Comparative Examples 1 to 8 and 15 to 22>

It is seen that the cured resins of the epoxy resin compositions containing an epoxy resin (constituent [A]) according to the present invention achieved both excellent flexural modulus of 2.8 GPa or more under a hot-wet condition and excellent rubbery state elastic modulus of 24 MPa or less, and were superior to those of Comparative Examples 1 to 8 and 15 to 22 in terms of the viscosity increase ratio after 3-hour retention at 80°C and the volatile content. Particularly, as seen from Example 8, when the epoxy resin was prepared using a phenol containing a naphthalene ring as the constituent [B], excellent flexural modulus was obtained under a room temperature-dry condition.

<Comparative Examples 9 to 12>

In Comparative Examples 9 to 12, the compositions included the same kinds of the constituents [A'], [C], and [D] as in Examples 1 to 25 but not the constituent [A]. As compared to Comparative Example 9, in Comparative Examples 11 and 12, the flexural modulus under a hot-wet condition and the rubbery state elastic modulus were improved; however, a reduction in the rubbery state modulus was insufficient.

<Comparative Example 13>

The composition included the same kinds of the constituents [A'], [C], and [D] as in Examples 1 to 25 but not the constituent [A]. In this composition, "DENACOL" (registered trademark) EX-142 (a monofunctional epoxy resin having one epoxy group in the molecule) was used in combination as an epoxy resin other than the constituent [A'] with the intention of reducing the free volume in the cured product; however, the resin composition had a very high volatile content in the curing process, and was thus judged not worthy of the evaluation of resin physical properties. It can be understood that EX-142 was volatilized in the curing process due to the slow reaction between the epoxy group of EX-142 and the active hydrogen of the amine contained in the constituent [C]. This suggests that an epoxy resin (constituent [A]) obtained by reaction of one or two epoxy groups of the constituent [A'] with a phenolic hydroxyl group of the constituent [B] is important as a monofunctional component that fills the free volume in the cured resin.

<Comparative Example 14>

The composition included the same constituents [A'], [C], and [D] as in Examples 1 to 25 but not the constituent [B], and contained bisphenol F (a phenol compound having two phenolic hydroxyl groups in one molecule) as a phenol other than the constituent [B]. This composition was insufficient in both an improvement in the flexural modulus under a hot-wet condition and a reduction in the rubbery state elastic modulus. It is seen that bisphenol F does not have a function of filling the free volume even when incorporated into an epoxy resin cross-linked structure, and rather causes an increase in the cross-linking density.

(Examples 1 to 5, 7 to 18, and 20 to 23, and Comparative Examples 23 to 27)

Epoxy resin compositions were prepared by the above-described procedure (10) or (11) in accordance with the respective blending ratios shown in Tables 1-1, 1-2, 1-3, 2-1, 2-2, and 3, and the viscosity was measured by the above-described procedure of (19).

The measurement results were as shown in Tables 1-1, 1-2, 1-3, 2-1, 2-2, and 3.

[Table 3]

| | | Comparative Example 23 | Comparative Example 24 | Comparative Example 25 | Comparative Example 26 | Comparative Example 27 |
|---|---|---|---|---|---|---|
| Constituent [A'] | "SUMI-EPOXY" (Reg. TM) ELM434 | 100 | 100 | | 100 | 100 |
| | 3,4'-TGDDE | | | 100 | | |
| | 4,4'-TGDDE | | | | | |
| Epoxy Resins other than Constituent [A'] | TOREP A-204E | | | | | |

(continued)

| | | Comparative Example 23 | Comparative Example 24 | Comparative Example 25 | Comparative Example 26 | Comparative Example 27 |
|---|---|---|---|---|---|---|
| Constituent [D] | TPP-MK | 0.8 | 0.8 | 0.8 | 0.8 | 0.8 |
| Constituent [E] | "SUMIKAEXECEL" (Reg. TM) PES2603MP | | 5.3 | 6.0 | 7.5 | 11.1 |
| Epoxy Resin Compositions | Viscosity at 20°C (Pa·s) | $1.7\times10^3$ | $5.0\times10^3$ | $6.0\times10^3$ | $9.1\times10^3$ | $3.0\times10^4$ |
| | Viscosity at 100°C (Pa·s) | 0.20 | 0.64 | 0.70 | 0.95 | 2.41 |

<Examples 1 to 25>

It was confirmed by $^1$H-NMR measurement and HPLC measurement that the epoxy resin compositions in which the constituents [A'] and [B] were allowed to react in advance contained the constituent [A]. It is seen that, by containing the constituent [A], the compositions obtained after the heat treatment performed in advance in Examples 1 to 5, 7 to 18, and 20 to 23 had a viscosity at 20°C of about 6 to $10^4$ times with a reduce viscosity at 100°C of about 1.7 to 10 times or less, i.e., the epoxy resin compositions exhibited a very large change in viscosity with a change in temperature, as compared to the epoxy resin composition of Comparative Example 23. An epoxy resin composition obtained by adding the constituent [C] to any of the compositions obtained after the heat treatment performed in advance is a preferred mode since it not only gives a cured product that is excellent in terms of an improvement in the flexural modulus under a hot-wet condition and a reduction in the rubbery state elastic modulus, but also provides an epoxy resin composition that exhibits excellent resin impregnation into a fiber base material in the prepreg production and excellent prepreg surface tackiness at room temperature.

<Comparative Examples 23 to 27>

Mixtures obtained by dissolving the constituent [E] (thermoplastic resin) in the constituent [A'] for the purpose of increasing the viscosity at 20°C are shown in Comparative Examples 24 to 27. It is seen that, by incorporating the thermoplastic resin, the viscosity at 100°C was increased by about 3 to 12 times while the viscosity at 20°C was increased by about 3 to 18 times, as compared to Comparative Example 23. Since the change in viscosity was small with respect to the change in temperature, it is seen that it is difficult to achieve an epoxy resin composition that has both an excellent resin impregnating property into a fiber base material in the prepreg production and an excellent prepreg surface tackiness at room temperature, simply by dissolving a thermoplastic resin in an epoxy resin.

## Claims

**1.** An epoxy resin composition, comprising an epoxy resin (constituent [A]) which has two or more epoxy groups in one molecule, and in which one or two terminals in one molecule have the following structure:

$$-CH(OH)-CH_2-O-Y$$

(wherein, Y represents a non-functional aryl group).

**2.** An epoxy resin composition, comprising an epoxy resin obtained by an addition reaction of one or two of epoxy groups contained in one molecule of an epoxy resin (constituent [A']) having four or more epoxy groups in one molecule with a phenolic hydroxyl group contained in a monofunctional phenol (constituent [B]).

**3.** The epoxy resin composition according to claim 1 or 2, further comprising an epoxy resin (constituent [A']) having four or more epoxy groups in one molecule, and a curing agent (constituent [C]).

**4.** The epoxy resin composition according to claim 1, wherein the epoxy resin (constituent [A]) is represented by any one

of the following Formulae (VI), (VII), and (VIII):

[Chamical Formula 1]

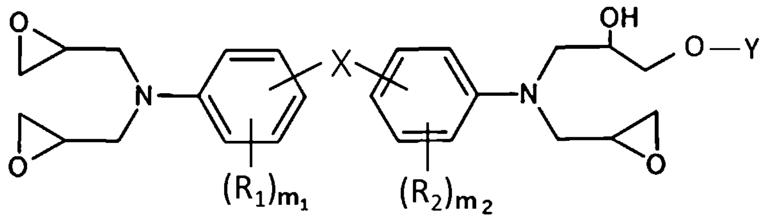

(VI)

[Chamical Formula 2]

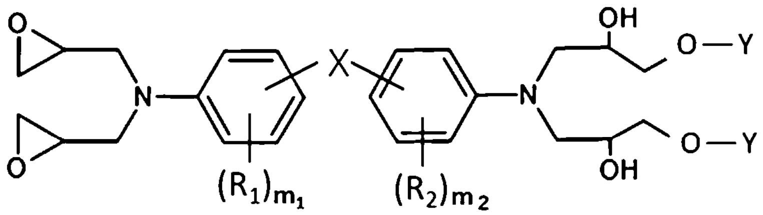

(VII)

[Chamical Formula 3]

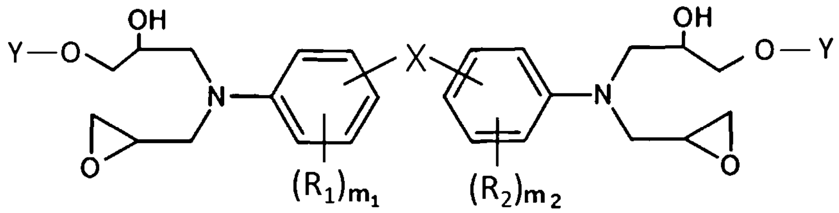

(VIII)

(in Formulae (VI), (VII), and (VIII), Y represents a non-functional aryl group; $R_1$ and $R_2$ each represent at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_1$ and $m_2$ each represent an integer of 0 to 4; when $m_1$ or $m_2$ is 2 or more, plural $R_1$s or $R_2$s are optionally the same or different; and X is any one of the structures represented by -O-, -S-, -CO-, -C(=O)O-, $-SO_2-$, $-CH_2-$, $-CH(CH_3)-$, $-C(CH_3)_2-$, and -N=N-).

5. The epoxy resin composition according to claim 3, wherein the constituent [A'] is contained in an amount of 50% by mass to 84% by mass and the constituent [A] is contained in an amount of 16% by mass to 50% by mass, taking a total amount of the epoxy resins contained in the resin composition as 100% by mass.

6. The epoxy resin composition according to claim 2, wherein the constituent [B] is a hydroxyphenyl compound, a naphthol compound, or a hydroxybiphenyl compound.

7. The epoxy resin composition according to claim 1, wherein the structure of Y is represented by the following Formula (IX), (X), (XI), or (XII):

[Chamical Formula 4]

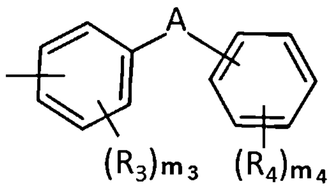

(IX)

(in Formula (IX), $R_3$ and $R_4$ each represent at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_3$ represents an integer of 0 to 4; $m_4$ represents an integer of 0 to 5; when $m_3$ or $m_4$ is 2 or more, plural $R_3$s or $R_4$s are optionally the same or different; and A is any one of the structures represented by -O-, -S-, -CO-, -C(=O)O-, $-SO_2-$, $-CH_2-$, $-CH(CH_3)-$, $-C(CH_3)_2-$, and -N=N-)

[Chamical Formula 5]

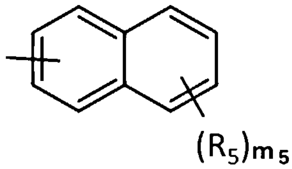

(X)

(in Formula (X), $R_5$ represents at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_5$ represents an integer of 0 to 7; and, when $m_5$ is 2 or more, plural $R_5$s are optionally the same or different)

[Chamical Formula 6]

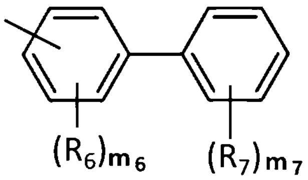

(XI)

(in Formula (XI), $R_6$ and $R_7$ each represent at least one selected from the group consisting of an aliphatic hydrocarbon group having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_6$ represents an integer of 0 to 4; $m_7$ represents an integer of 0 to 5; and, when $m_6$ or $m_7$ is 2 or more, plural $R_6$s or $R_7$s are optionally the same or different)

[Chamical Formula 7]

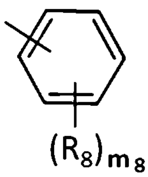

(XII)

(in Formula (XII), $R_8$ represents at least one selected from the group consisting of an aliphatic hydrocarbon group

having 1 to 5 carbon atoms, an alicyclic hydrocarbon group having 3 to 6 carbon atoms, an aromatic hydrocarbon group having 6 to 10 carbon atoms, an alkoxy group having 1 to 6 carbon atoms, an acyl group, a trifluoromethyl group, a nitro group, a cyano group, a phenyl group, and a halogen atom; $m_5$ represents an integer of 0 to 5; and, when $m_5$ is 2 or more, plural $R_8$s are optionally the same or different).

**8.** The epoxy resin composition according to claim 3, wherein the constituent [C] is an aromatic polyamine.

**9.** A prepreg, obtained by impregnating reinforcing fibers with the epoxy resin composition according to claim 1 or 2.

**10.** A fiber-reinforced composite material, comprising:

a cured epoxy resin obtained by curing the epoxy resin composition according to claim 1 or 2; and
reinforcing fibers.

**11.** A method of producing an epoxy resin composition, the method comprising:

allowing a constituent [A'] and a constituent [B] to undergo an addition reaction at 100°C to 180°C in the presence of a curing accelerator (constituent [D]);
subsequently lowering the temperature to less than 100°C; and then adding a constituent [C]:

[A']: an epoxy resin having four or more epoxy groups in one molecule
[B]: a monofunctional phenol
[C]: a curing agent
[D]: a curing accelerator.

## INTERNATIONAL SEARCH REPORT

International application No. **PCT/JP2024/014941**

**A. CLASSIFICATION OF SUBJECT MATTER**

***C08G 59/20***(2006.01)i; ***C08J 5/24***(2006.01)i
FI: C08G59/20; C08J5/24 CFC

According to International Patent Classification (IPC) or to both national classification and IPC

**B. FIELDS SEARCHED**

Minimum documentation searched (classification system followed by classification symbols)

C08G59/20; C08J5/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 113621219 A (GUANGDONG HUACAI COMPOSITE MATERIAL CO., LTD.) 09 November 2021 (2021-11-09) claims, paragraph [0017], example 1 | 1, 3, 6, 8 |
| Y | | 9, 10 |
| A | | 2, 4, 5, 7, 11 |
| X | JP 2000-7758 A (NAGASE CHIBA K. K.) 11 January 2000 (2000-01-11) claims, reference example 2, example 2 | 1, 6 |
| Y | | 9, 10 |
| A | | 2-5, 7, 8, 11 |
| Y | JP 2016-84451 A (TORAY INDUSTRIES, INC.) 19 May 2016 (2016-05-19) claims | 9, 10 |
| Y | JP 2011-79983 A (TORAY INDUSTRIES, INC.) 21 April 2011 (2011-04-21) claims | 9, 10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/014941**

**C. DOCUMENTS CONSIDERED TO BE RELEVANT**

| Category* | Citation of document, with indication, where appropriate, of the relevant passages | Relevant to claim No. |
|---|---|---|
| Y | WO 2016/204173 A1 (TORAY INDUSTRIES, INC.) 22 December 2016 (2016-12-22)<br>claims | 9,10 |
| A | CN 108727564 A (BEIJING JINHWEILI APPLIED CHEMICAL PRODUCTS CO., LTD.) 02 November 2018 (2018-11-02)<br>entire text | 1-11 |
| A | WO 02/086624 A1 (NISSAN CHEMICAL IND LTD.) 31 October 2002 (2002-10-31)<br>entire text | 1-11 |
| A | JP 2014-503564 A (AZIENDE CHIMICHE RIUNITE ANGELINI FRANCESCO A. C. R.) 13 February 2014 (2014-02-13)<br>entire text | 1-11 |

Form PCT/ISA/210 (second sheet) (July 2022)

**INTERNATIONAL SEARCH REPORT**
**Information on patent family members**

International application No.
**PCT/JP2024/014941**

| Patent document cited in search report | Publication date (day/month/year) | Patent family member(s) | Publication date (day/month/year) |
|---|---|---|---|
| CN 113621219 A | 09 November 2021 | (Family: none) | |
| JP 2000-7758 A | 11 January 2000 | (Family: none) | |
| JP 2016-84451 A | 19 May 2016 | (Family: none) | |
| JP 2011-79983 A | 21 April 2011 | (Family: none) | |
| WO 2016/204173 A1 | 22 December 2016 | US 2018/0134837 A1<br>claims<br>EP 3312210 A1<br>CN 107531879 A<br>KR 10-2018-0019522 A | |
| CN 108727564 A | 02 November 2018 | (Family: none) | |
| WO 02/086624 A1 | 31 October 2002 | US 2004/0110096 A1<br>entire text<br>EP 1378796 A1<br>KR 10-0872674 B1<br>CN 1502062 A | |
| JP 2014-503564 A | 13 February 2014 | US 2013/0261160 A1<br>entire text<br>EP 2670737 A1<br>CN 103298797 A<br>KR 10-2014-0000705 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020058766 A
- WO 2010109929 A
- WO 2018159574 A
- JP 2009221460 A